# EUROPÄISCHE PATENTSCHRIFT

(11) **EP 3 047 771 B1**
(45) Veröffentlichungstag und Bekanntmachung des Hinweises auf die Patenterteilung: **15.03.2017**
(21) Anmeldenummer: 15151741.4
(22) Anmeldetag: 20.01.2015
(51) Int. Cl.: A47L 9/00, A47L 9/02, A47L 5/22, A47L 5/36, A47L 9/06, B60B 19/00, G05D 1/02

(54) **Staubsaugerroboter**
Robot vacuum cleaner
Robot aspirateur

(43) Veröffentlichungstag der Anmeldung: 27.07.2016
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- WO-A1-02/058527
- WO-A1-02/074150
- GB-A- 2 344 750

## Beschreibung

Die Erfindung betrifft einen Staubsaugerroboter.

Konventionelle Staubsauger werden von einem Benutzer bedient, der den Staubsauger bewegt und insbesondere die Bodendüse, über die Staub eingesaugt wird, über die zu reinigende Fläche bewegt. Dabei umfassen beispielsweise herkömmliche Bodenstaubsauger ein Gehäuse, das auf Rollen und/oder Gleitkufen gelagert ist. In dem Gehäuse ist ein Staubsammelbehälter angeordnet, in dem sich ein Filterbeutel befindet. Eine Bodendüse ist über ein Saugrohr und einen Saugschlauch mit dem Staubsammelraum verbunden. Bei den herkömmlichen Bodenstaubsaugern ist im Gehäuse weiterhin eine Motorgebläseeinheit angeordnet, die im Staubsammelbehälter einen Unterdruck erzeugt. In Luftströmungsrichtung ist somit die Motorgebläseeinheit hinter der Bodendüse, dem Saugrohr, dem Saugschlauch sowie dem Staubsammelbehälter bzw. dem Filterbeutel angeordnet. Da derartige Motorgebläseeinheiten von gereinigter Luft durchströmt werden, werden sie manchmal auch als Reinluft-Motoren ("Clean-Air-Motor") bezeichnet.

Insbesondere in früheren Zeiten gab es auch Staubsauger, in denen die angesaugte Schmutzluft direkt durch das Motorgebläse hindurch und in einen unmittelbar daran anschließenden Staubbeutel geführt wurde. Beispiele hierfür sind in US 2,101,390, US 2,036,056 und US 2,482,337 gezeigt. Diese Staubsaugerformen sind heutzutage nicht mehr sehr verbreitet.

Derartige Dreckluft- oder Schmutzluft-Motorgebläse werden auch als "Dirty-Air-Motor" oder "Direct-Air-Motor" bezeichnet. Die Verwendung derartiger Dirty-Air-Motoren wird auch in den Dokumenten GB 554 177, US 4,644,606, US 4,519,112, US 2002/0159897, US 5,573,369, US 2003/0202890 oder der US 6,171,054 beschrieben.

In den letzten Jahren gewannen auch Staubsaugerroboter an Popularität. Derartige Staubsaugerroboter müssen nicht mehr von einem Benutzer über die zu reinigende Fläche geführt werden; sie fahren vielmehr selbstständig den Boden ab. Beispiele für derartige Staubsaugerroboter sind beispielsweise aus der EP 2 741 483, der DE 10 2013 100 192 und der US 2007/0272463 bekannt.

Der Nachteil dieser bekannten Staubsaugerroboter besteht darin, dass diese nur eine niedrige Staubaufnahme haben. Dies ist dadurch begründet, dass entweder die Staubaufnahme nur durch den Bürsteffekt einer rotierenden Bürstenwalze erzielt wird, oder Motorgebläseeinheiten mit sehr geringer Leistung verwendet werden.

Ein alternativer Staubsaugerroboter wird in der WO 02/074150 beschrieben, welche dem Oberbegriff des unabhängigen Anspruchs 1 entspricht. Dieser Staubsaugerroboter ist zweiteilig aufgebaut und umfasst ein Behälter- oder Gebläsemodul und ein Reinigungskopfmodul, das über einen Schlauch mit dem Gebläsemodul verbunden ist.

Die GB 2 344 750 zeigt einen selbstangetriebenen Staubsauger, bei dem in einem Ausführungsbeispiel ein Bürstengehäuse um ein Gelenk schwenkbar angeordnet ist.

Vor diesem Hintergrund besteht die der Erfindung zu Grunde liegende Aufgabe darin, einen verbesserten Staubsaugerroboter bereitzustellen.

Diese Aufgabe wird durch den Gegenstand von Anspruch 1 gelöst. Erfindungsgemäß wird ein Staubsaugerroboter bereitgestellt, umfassend eine auf Rädern gelagerte Bodendüse und eine Staubsammeleinheit,
wobei die Bodendüse eine Antriebseinrichtung aufweist, um wenigstens eines der Räder der Bodendüse anzutreiben,
wobei eines der Räder, mehrere oder alle Räder der Bodendüse omnidirektionale Räder sind,
wobei die Bodendüse eine Bodenplatte mit einer Grundfläche aufweist, die im Betrieb des Staubsaugerroboters der zu reinigenden Fläche zugewandt ist, wobei die Bodenplatte parallel zur Grundfläche einen Luftströmungskanal aufweist, durch den zu reinigende Luft in die Bodendüse eintritt, und
wobei die Bodendüse eine Dreheinrichtung zum Drehen des Luftströmungskanals um eine Achse senkrecht zur Grundfläche umfasst.

Die Verwendung eines oder mehrerer omnidirektionaler Räder ermöglicht eine sehr flexible und vielseitige Bewegung der Bodendüse, wodurch der Staubsaugerroboter auch beengte und schwierig zu erreichende Flächen zuverlässig erreichen und auch wieder verlassen kann. Dabei erlaubt die Dreheinrichtung, den Luftströmungskanal, durch den aufzunehmender Schmutz und Staub in die Bodendüse eintritt, in vorteilhafter Weise auszurichten. Dies erhöht die Saugeffizienz des Staubsaugerroboters, da insbesondere die von der Bodendüse aufgrund des Luftströmungskanals bearbeitete Bodenfläche optimiert wird.

Die Bodenplatte wird auch als Düsensohle bezeichnet. Der Luftströmungskanal wird auch als Saugschlitz, Düsenöffnung, Saugmund oder Saugkanal bezeichnet.

Jedes omnidirektionale Rad kann an seinem Umfang eine Mehrzahl von drehbar gelagerten Rollen bzw. Rollkörpern aufweisen, deren Achsen nicht parallel zur Radachse (des omnidirektionalen Rads) verlaufen. Insbesondere können die Achsen der Rollen schräg oder quer zur Radachse verlaufen bzw. ausgerichtet sein. Ein Beispiel für ein omnidirektionales Rad ist ein Mecanum-Rad, das unter anderem in der US 3,876,255 beschrieben wird.

Die Bodenplatte kann mit ihrer Grundfläche im Betrieb des Staubsaugerroboters auf der zu reinigenden Fläche (dem Boden) aufliegen oder von dieser beabstandet sein. Die Bodendüse kann eine Borstenleite aufweisen, mit der, im Falle einer Beabstandung, die Luftströmung durch den Schlitz zwischen zu reinigender Fläche und Bodenplatte eingestellt werden kann. Der Luftströmungskanal kann parallel zur Grundfläche eine gerade, also nicht gekrümmte Form aufweisen. Er kann zwei parallele, insbesondere gerade ausgebildete, Querseiten aufweisen. Er kann insbesondere eine rechteckige Form oder Grundfläche aufweisen.

Als Längsrichtung wird die Richtung bezeichnet, in der der Luftströmungskanal parallel zur Grundfläche der Bodendüse seine minimale Ausdehnung aufweist; die Querrichtung liegt senkrecht dazu (also in Richtung der maximalen Ausdehnung des Luftströmungskanals) und ebenfalls parallel zur Grundfläche. Damit sind die Längsseiten die Seiten entlang der bzw. parallel zur Richtung minimaler Ausdehnung und die Querseiten die Seiten entlang der Richtung maximaler Ausdehnung in der Ebene der Grundfläche.

Die Bodendüse kann auch mehrere Luftströmungskanäle aufweisen. Bei einer Mehrzahl von Luftströmungskanälen können diese eine gleiche Form oder unterschiedliche Formen aufweisen.

Die Bodendüse kann eine Hebeeinrichtung zum Verstellen der Höhe der Bodenplatte über dem Boden aufweisen. Damit lässt sich die Bodenfreiheit der Bodendüse, insbesondere bei Verwendung einer Borstenleiste, verstellen. Mit der Hebeeinrichtung kann die Bodenplatte bezüglich der Radachsen angehoben und abgesenkt werden. Die Hebeeinrichtung kann rein mechanisch oder elektromechanisch ausgebildet sein.

Die Dreheinrichtung kann zum Ausrichten des Luftströmungskanals senkrecht zur Bewegungsrichtung der Bodendüse ausgebildet sein. Der (beispielsweise rechteckige) Luftströmungskanal wird also bezüglich seiner Längsrichtung parallel und bezüglich seiner Querrichtung senkrecht zur Bewegungsrichtung der Bodendüse ausgerichtet. Als Längsrichtung wird die Richtung bezeichnet, in der der Luftströmungskanal parallel zur Grundfläche der Bodendüse seine minimale Ausdehnung aufweist; die Querrichtung liegt senkrecht dazu (also in Richtung der maximalen Ausdehnung des Luftströmungskanals) und ebenfalls parallel zur Grundfläche.

Damit wird quer zur Bewegungsrichtung der Bodendüse die vom Luftströmungskanal überstrichene Fläche maximiert.

Die Dreheinrichtung kann einen um eine Achse senkrecht zur Grundfläche der Bodenplatte drehbar gelagerten Drehteller aufweisen, in dem der Luftströmungskanal (teilweise oder vollständig) ausgebildet ist. Ein derartig um eine vertikale Achse drehbarer Drehteller erlaubt eine einfache Ausrichtung des Luftströmungskanals. Der Drehteller kann als Teil der Bodenplatte ausgebildet sein.

Die Dreheinrichtung kann einen Drehantrieb zum Drehen des Luftströmungskanals, insbesondere zum Drehen des Drehtellers, umfassen. Der Dreheinrichtung kann an die Welle der Motorgebläseeinheit gekoppelt sein.

Die beschriebenen Staubsaugerroboter können eine elektronische Drehsteuerung zum Ansteuern der Dreheinrichtung, insbesondere des Drehtellers, umfassen. Insbesondere kann die elektronische Drehsteuerung mit der Antriebseinrichtung der Bodendüse gekoppelt sein.

Alternativ kann der Staubsaugerroboter eine Lenkrolle mit einem Winkelsensor umfassen, wobei die Drehsteuerung mit dem Winkelsensor gekoppelt ist. Die Lenkrolle richtet sich selbständig zur Bewegungsrichtung aus. Auf diese Weise kann die Drehsteuerung basierend auf einem Signal des Winkelsensors (beispielsweise eines Drehgebers) die Bewegungsrichtung des Staubsaugerroboters erfassen.

Eine Lenkrolle weist eine horizontale Rollen-Drehachse auf, die sich nicht mit der vertikalen Drehachse der Lenkrolle schneidet.

Alternativ können die Staubsaugerroboter auch eine mechanische Drehsteuerung zum Ansteuern der Dreheinrichtung umfassen. Dabei kann der Drehteller frei drehbar gelagert sein. Die mechanische Drehsteuerung kann beispielsweise eine Rolle umfassen, die bezüglich der Drehachse des Drehtellers versetzt, nicht um eine horizontale Achse bewegbar mit dem Drehteller verbunden ist. Eine Ausrichtung der Rolle in Bewegungsrichtung erfolgt dabei durch eine Drehung des frei drehbar gelagerten Drehtellers. Dies führt dementsprechend auch zu einer Quer-Ausrichtung des Luftströmungskanals.

Der Luftströmungskanal kann in Querrichtung eine Ausdehnung von wenigstens 90%, vorzugsweise von wenigstens 95 %, einer Breite der Bodendüse, insbesondere der Bodenplatte und/oder des Drehtellers, aufweisen. Indem sich der Luftströmungskanal dergestalt über die Breite der Bodendüse (bzw. deren Grundfläche) erstreckt, können auch Flächen entlang einer Wand in vorteilhafter Weise erreicht werden.

Der Luftströmungskanal kann sich mit seinen beiden Enden in seiner Querrichtung (d.h. den Längsseiten) bis zum Rand des Drehtellers und/oder bis zum Rand der Bodenplatte, d.h. über die volle Breite der Bodenplatte, erstrecken. Dies ermöglicht eine möglichst große durch den Luftströmungskanal überstrichene Fläche. Die beiden Seiten des Luftströmungskanals entlang seiner Querrichtung können Sekanten bezüglich des Drehtellers bilden.

Die Bodenplatte und/oder der Drehteller können derart ausgebildet sein, dass sich der Luftströmungskanal, zumindest in einer vorbestimmten Position des Drehtellers, über den Drehteller und (zumindest teilweise) über die Bodenplatte erstreckt. Hierfür können in der Bodenplatte ein oder mehrere an den Drehteller angrenzende Teilkanäle ausgebildet sein. Diese Teilkanäle bilden dann Verlängerungen des Luftströmungskanals, wenn der Drehteller in einer Position ist, in der die Teilkanäle an den Luftströmungskanal im Drehteller angrenzen bzw. sich anschließen oder mit diesem fluchten.

Bei den zuvor beschriebenen Staubsaugerrobotern können die Räder innerhalb einer Breite der Bodenplatte angeordnet sein. Mit anderen Worten erstrecken sich dann die Räder nicht über die Breite der Bodenplatte hinaus bzw. sind nicht seitlich neben einer Längsseite der Bodenplatte angeordnet. Damit lässt sich die Bodendüse, insbesondere die Bodenplatte, ohne eine verbleibende Beabstandung durch ein seitlich neben der Bodenplatte angeordnetes Rad an eine Wand annähern, was eine Reinigung von Flächen entlang von Wänden in vorteilhafter Weise ermöglicht.

Bei den zuvor beschriebenen Staubsaugerrobotern kann die Staubsammeleinheit gemeinsam mit der Bodendüse auf den Rädern der Bodendüse gelagert sein. Auf diese Weise kann ein einteiliger Staubsaugerroboter bereitgestellt werden. Hier ist somit kein separater oder eigener Antrieb für die Staubsammeleinheit erforderlich; die Staubsammeleinheit wird zusammen und gemeinsam mit der Bodendüse bewegt.

Alternativ kann die Staubsammeleinheit separat von der Bodendüse auf Rädern gelagert sein und über einen Saugschlauch mit der Bodendüse fluidisch verbunden sein, wobei die Staubsammeleinheit eine Antriebseinrichtung aufweist, um wenigstens eines der Räder der Staubsammeleinheit anzutreiben.

Bei dieser Alternative sind die Staubsammeleinheit und die Bodendüse als separate oder getrennte Einheiten ausgebildet; sie sind jeweils (separat) auf eigenen Rädern gelagert. Es handelt sich also um einen zweiteiligen Staubsaugerroboter. Die Staubsammeleinheit und die Bodendüse sind unabhängig voneinander bewegbar.

Die Antriebseinrichtung der Staubsammeleinheit kann von der Antriebseinrichtung der Bodendüse getrennt oder separat ausgebildet sein. Insbesondere können die Staubsammeleinheit und die Bodendüse unabhängig voneinander angetrieben werden. Sie können sich beispielsweise in unterschiedliche Richtungen bewegen. Auch kann eine der beiden nicht bewegt werden, während die andere bewegt wird.

Wenn die Staubsammeleinheit separat von der Bodendüse auf Rädern gelagert ist, können eines der Räder, mehrere oder alle Räder der Staubsammeleinheit omnidirektionale Räder sein. Damit lässt sich auch die Staubsammeleinheit in sehr flexibler und vielseitiger Weise bewegen.

Die beschriebenen Staubsaugerroboter können weiterhin eine Motorgebläseeinheit zum Ansaugen eines Luftstroms durch die Bodendüse umfassen. Bei der Motorgebläseeinheit kann es sich um einen Dirty-Air-Motor oder einen Clean-Air-Motor (wie oben beschrieben) handeln.

Die Motorgebläseeinheit kann ein, insbesondere einstufiges, Radialgebläse aufweisen. Der Einsatz einer Motorgebläseeinheit führt zu besonders guten Reinigungs- bzw. Saugergebnissen. Bei einem Radialgebläse wird die Luft parallel oder axial zur Antriebsachse des Gebläserads angesaugt und durch die Rotation des Gebläserads umgelenkt, insbesondere um etwa 90° umgelenkt, und radial ausgeblasen.

Die Bodendüse weist eine Saugöffnung zur Herstellung einer fluidischen Verbindung mit der Motorgebläseeinheit auf. Diese Saugöffnung steht in fluidischer, d.h. strömungstechnischer, Verbindung mit dem Luftströmungskanal. Durch den Luftströmungskanal wird der Anpressdruck der Bodendüse bei guter Saugleistung in vorteilhafter Weise eingestellt.

Die Motorgebläseeinheit kann zwischen der Bodendüse und der Staubsammeleinheit derart angeordnet sein, dass ein durch die Bodendüse angesaugter Luftstrom durch die Motorgebläseeinheit hindurch in die Staubsammeleinheit strömt.

Damit wird ein Dirty-Air-Motor bzw. Direct-Air-Motor in vorteilhafter Weise in einem Staubsaugerroboter eingesetzt. Auch bei geringer Motorleistung lässt sich mit dem erfindungsgemäßen Staubsaugerroboter ein hoher Volumenstrom erzielen. Ein Dirty-Air-Motor weist beispielsweise eine maximale Drehzahl von weniger als 30.000 U/min und eine elektrische Aufnahmeleisung von weniger als 900 W auf.

Bei den zuvor beschriebenen Staubsaugerrobotern kann die Motorgebläseeinheit auf und/oder über der Bodendüse, insbesondere unmittelbar auf und/oder über der Bodendüse, angeordnet sein. Dies führt zu einer vorteilhaften Saugleistung. Darüber hinaus kann ein kompakter Aufbau der Einheit aus Bodendüse und Motorgebläseeinheit erreicht werden. Beispielsweise kann die Motorgebläseeinheit derart angeordnet sein, dass durch die Bodendüse eingesaugte Luft unmittelbar von der Bodendüse in die Motorgebläseeinheit eintritt.

Die Motorgebläseeinheit kann über ein Rohrstück mit der Bodendüse fluidisch verbunden sein. In diesem Fall ist die Motorgebläseeinheit nicht mehr unmittelbar auf und/oder über der Bodendüse angeordnet. Das Rohrstück kann insbesondere eine Länge von 10 mm bis 300 mm, vorzugsweise von 10 mm bis 100 mm haben.

Die Staubsammeleinheit kann über einen Saugschlauch mit der Bodendüse fluidisch verbunden sein, wobei die Motorgebläseeinheit zwischen der Bodendüse und dem Saugschlauch derart angeordnet ist, dass der durch die Bodendüse angesaugte Luftstrom durch die Motorgebläseeinheit hindurch in den Saugschlauch strömt. Bei einer derartigen Ausbildung liegt im Betrieb auch im Saugschlauch ein Überdruck vor. Damit muss die Saugschlauchwand allenfalls geringfügig verstärkt werden.

In Luftströmungsrichtung ist die Bodendüse, manchmal auch als "Saugdüse" bezeichnet, vor dem Saugschlauch, und der Saugschlauch vor der Staubsammeleinheit angeordnet. Die mittels der Motorgebläseeinheit durch die Bodendüse angesaugte Luft wird zunächst in den Saugschlauch und anschließend in die Staubsammeleinheit geführt. Aufgrund der fluidischen bzw. strömungstechnischen Verbindung wird ein durchgängiger Luftstrom durch die Bodendüse und den Saugschlauch in die Staubsammeleinheit gewährleistet.

Es hat sich überraschenderweise herausgestellt, dass Schmutzluftmotoren (Dirty-Air-Motoren) auch in Staubsaugerrobotern in vorteilhafter Weise eingesetzt werden können, insbesondere um die durch die Bodendüse angesaugte Schmutzluft durch die Motorgebläseeinheit hindurch in die Staubsammeleinheit zu fördern.

Anders als bei herkömmlichen Staubsaugerrobotern, wo im Betrieb insbesondere in der Staubsammeleinheit bzw. der Staubsammelkammer ein Unterdruck herrscht, liegt beim hier beschriebenen Staubsaugerroboter zumindest in der Staubsammeleinheit ein Überdruck vor. Auf diese Weise können die Wandstärken der Staubsammeleinheit reduziert bzw. Verstärkungselemente (wie beispielsweise Verstärkungsrippen) in geringerem Umfang eingesetzt oder gar ganz vermieden werden, was auch zu einer Gewichtsreduzierung führt.

Aufgrund des Aufbaus des Staubsaugerroboters mit einer Staubsammeleinheit und einer damit über einen Schlauch verbundenen Bodendüse wird eine besonders vorteilhafte Staubaufnahme bei hoher Flexibilität ermöglicht. Insbesondere kann einerseits die Bodendüse auch in beengten Verhältnissen die zu saugenden Flächen erreichen und andererseits die Staubsammeleinheit ein verhältnismäßig großes Staubaufnahmevolumen bereitstellen.

Gemäß einer Alternative kann die Staubsammeleinheit über einen Saugschlauch mit der Bodendüse fluidisch verbunden sein, wobei die Motorgebläseeinheit zwischen dem Saugschlauch und der Staubsammeleinheit derart angeordnet ist, dass der durch die Bodendüse eingesaugt Luftstrom durch den Saugschlauch hindurch in die Motorgebläseeinheit und durch die Motorgebläseeinheit hindurch in die Staubsammeleinheit strömt.

Auf diese Weise kann auf Seiten der Bodendüse eine leichte und kompakte Anordnung erzielt werden, was zu einer hohen Beweglichkeit der Bodendüse und der Erreichbarkeit selbst beengter Flächen führt.

Insbesondere kann die Staubsammeleinheit ein Gehäuse und einen in dem Gehäuse angeordneten Staubabscheider umfassen, wobei die Motorgebläseeinheit auf, an oder in dem Gehäuse angeordnet ist.

Das Gehäuse kann eine Gehäusewand umfassen, die besondere aus Kunststoff besteht.

Die Anordnung des Staubabscheiders innerhalb des Gehäuses der Staubsammeleinheit und die Anordnung der Motorgebläseeinheit an oder in dem Gehäuse erlauben eine kompakte Ausgestaltung der Staubsammeleinheit und damit des Staubsaugerroboters insgesamt.

Die Motorgebläseeinheit kann (insbesondere im Betrieb des Staubsaugerroboters) über oder oberhalb des Staubabscheiders oder auf gleicher Höhe wie der Staubabscheider angeordnet sein. Die Motorgebläseeinheit ist somit insbesondere nicht unterhalb des Staubabscheiders angeordnet. Damit muss die Förderung der Schmutzluft durch die Motorgebläseeinheit nicht oder nur in geringem Umfang entgegen der Schwerkraft erfolgen.

Die Motorgebläseeinheit kann auf dem Gehäuse angeordnet sein. Dabei kann insbesondere der Staubabscheider im Betrieb des Staubsaugerroboters unterhalb der Motorgebläseeinheit oder auf gleicher Höhe angeordnet sein.

Die Staubsammeleinheit kann drei oder vier Räder, insbesondere genau drei oder genau vier Räder, aufweisen. Die Antriebseinrichtung der Staubsammeleinheit kann ausgebildet sein, eines der Räder, mehrere oder alle Räder der Staubsammeleinheit anzutreiben. Für jedes antreibbare Rad kann die Antriebseinrichtung eine separate oder eigenständige Antriebseinheit aufweisen. Dies erlaubt ein unabhängiges bzw. eigenständiges Antreiben jedes Rades.

Die Bodendüse kann drei oder vier Räder, insbesondere genau drei oder genau vier Räder, aufweisen. Die Antriebseinrichtung der Staubsammeleinheit kann ausgebildet sein, eines der Räder, mehrere oder alle Räder der Staubsammeleinheit anzutreiben. Für jedes antreibbare Rad kann die Antriebseinrichtung eine separate oder eigenständige Antriebseinheit aufweisen. Dies erlaubt ein unabhängiges bzw. eigenständiges Antreiben jedes Rades.

Die Motorgebläseeinheit kann derart ausgebildet sein, dass sie bei einer elektrischen Aufnahmeleistung von weniger als 450 W gemäß DIN EN 60312-1 bei Blende 8 einen Volumenstrom von mehr als 30 l/s, insbesondere mehr als 35 l/s, erzeugt. Alternativ oder zusätzlich kann die Motorgebläseeinheit derart ausgebildet sein, dass sie bei einer elektrischen Aufnahmeleistung von weniger als 250 W gemäß DIN EN 60312-1 bei Blende 8 einen Volumenstrom von mehr als 25 l/s, insbesondere mehr als 30 l/s, erzeugt. Alternativ oder zusätzlich kann die Motorgebläseeinheit derart ausgebildet sein, dass sie bei einer elektrischen Aufnahmeleistung von weniger als 100 W gemäß DIN EN 60312-1 bei Blende 8 einen Volumenstrom von mehr als 10 l/s, insbesondere mehr als 15 l/s, erzeugt.

Auf diese Weise wird ein besonders effizienter Staubsaugerroboter erhalten, der insbesondere im Vergleich zu herkömmlichen Staubsaugerrobotern eine stark erhöhte Saugkraft aufweist.

Die Luftdaten eines Staubsaugers bzw. einer Motorgebläseeinheit werden gemäß DIN EN 60312-1:2014-01 bestimmt. Insbesondere wird auf Abschnitt 5.8 verwiesen. Dabei wird die Messeinrichtung in der Ausführung B gemäß Abschnitt 7.3.7.3 verwendet. Falls eine Motorgebläseeinheit ohne Staubsaugergehäuse gemessen wird, wird ebenfalls die Messeinrichtung B verwendet. Für gegebenenfalls notwendige Zwischenstücke zum Anschluss an die Messkammer gelten die Ausführungen in Abschnitt 7.3.7.1.

Für den Begriff "Luftstrom" gemäß DIN EN 60312-1 werden auch die Begriffe "Volumenstrom" und "Saugluftstrom" verwendet.

Der Saugschlauch kann einen Durchmesser in einem Bereich von 25 mm bis 50 mm und/oder eine Länge in einem Bereich von 500 mm bis 2500 mm haben. Der Saugschlauch kann flexibel ausgebildet sein, insbesondere so dass er beim bestimmungsgemäßen Gebrauch des Staubsaugerroboters deformierbar ist. Der Saugschlauch kann teilweise oder vollständig aus Kunststoff bestehen. Er kann insbesondere eine Kunststoffwand und/oder eine Verstärkung aus Metall (beispielsweise einen Spiraldraht) umfassen. Der Saugschlauch kann als Stretch-Schlauch ausgebildet sein. Er weist somit eine veränderbare Länge auf und kann auf ein Mehrfaches seiner ungestreckten (ruhenden) Länge ausgezogen werden.

Der Saugschlauch kann über seine Länge einen konstanten oder einen variablen Durchmesser aufweisen. Insbesondere kann der Saugschlauch eine konische Form aufweisen, wobei sich vorzugsweise der Durchmesser zur Bodendüse hin verringert. Die oben angegebenen Durchmesser beziehen sich insbesondere auf den kleinsten Durchmesser des Saugschlauchs.

Die Staubsammeleinheit kann derart ausgebildet und/oder die Motorgebläseeinheit derart angeordnet sein, dass keine Berührung des Gebläserads der Motorgebläseeinheit mit einer Prüfsonde gemäß IEC/EN 60335 durch die Bodendüse möglich ist. Hier wird auf Abschnitt 8 der Version DIN EN 60335-1: 2012-10 Bezug genommen. Insbesondere soll die Prüfsonde B verwendet werden.

Dies verringert die Gefahr einer Beschädigung der Motorgebläseeinheit und die Gefahr von Verletzungen beim Anfassen der Bodendüse bei laufendem Motor.

Die Staubsammeleinheit kann eine Hebeeinrichtung zum Verstellen der Höhe der Unterseite der Staubsammeleinheit, insbesondere der Unterseite des Gehäuses der Staubsammeleinheit, über dem Boden aufweisen. Damit kann der Abstand der Unterseite der Staubsammeleinheit bzw. die Bodenfreiheit der Staubsammeleinheit verstellt werden. Dies erlaubt, beispielsweise in einer Aufladeposition des Staubsaugerroboters, die Höhe der Unterseite über dem Boden zu erhöhen, um die Bodendüse unter die Staubsammeleinheit bzw. ihr Gehäuse zu fahren.

Der Staubsaugerroboter kann ein Beutelsauger sein. Ein Beutelsauger ist ein Staubsauger, bei dem der eingesaugte Staub in einem Staubsaugerfilterbeutel abgeschieden und gesammelt wird. Die Filterfläche des Staubsaugerfilterbeutels kann wenigstens 800 cm² betragen. Der Staubsaugerroboter kann insbesondere ein Beutelsauger für Wegwerfbeutel sein.

Die Filterfläche eines Staubsaugerfilterbeutels bezeichnet die gesamte Fläche des Filtermaterials, das sich zwischen bzw. innerhalb der randseitigen Nähte (beispielsweise Schweiß-oder Klebenähte) befindet. Dabei sind auch möglicherweise vorhandene Seiten- oder Oberflächenfalten zu berücksichtigen. Die Fläche der Beutelfüllöffnung bzw. Eintrittsöffnung (einschließlich einer dieser Öffnung umgebenden Naht) ist nicht Teil der Filterfläche.

Der Staubsaugerfilterbeutel kann ein Flachbeutel sein oder eine Klotzbodenform aufweisen. Ein Flachbeutel wird durch zwei Seitenwände aus Filtermaterial gebildet, die entlang ihrer Umfangsränder miteinander verbunden (beispielsweise verschweißt oder verklebt) sind. In einer der beiden Seitenwände kann die Beutelfüllöffnung bzw. Eintrittsöffnung vorgesehen sein. Die Seitenflächen bzw. -wände können jeweils eine rechteckige Grundform aufweisen. Jede Seitenwand kann eine oder mehrere Lagen Vlies und/oder Vliesstoff umfassen.

Der Staubsaugerroboter in Form eines Beutelsaugers kann einen Staubsaugerfilterbeutel umfassen, wobei der Staubsaugerfilterbeutel in Form eines Flachbeutels und/oder als Wegwerfbeutel ausgebildet ist.

Die Beutelwand des Staubsaugerfilterbeutels kann eine oder mehrere Lagen eines Vlieses und/oder eine oder mehrere Lagen eines Vliesstoffes umfassen. Sie kann insbesondere ein Laminat aus einer oder mehrerer Lagen Vlies und/oder einer oder mehrerer Lagen Vliesstoff umfassen. Ein derartiges Laminat ist beispielsweise in der WO 2007/068444 beschrieben.

Der Begriff Vliesstoff wird im Sinne der Norm DIN EN ISO 9092:2010 verstanden. Dabei werden insbesondere Film- und Papierstrukturen, insbesondere Filterpapier, nicht als Vliesstoff angesehen. Ein "Vlies" ist eine Struktur aus Fasern und/oder Endlosfilamenten oder Kurzfasergarnen, die durch irgendein Verfahren zu einem Flächengebilde geformt wurden (ausgenommen die Verflechtung von Garnen wie in gewobenem Gewebe, geknüpftem Gewebe, Maschenware, Spitze oder getuftetem Gewebe), allerdings nicht durch irgendein Verfahren verbunden wurden. Durch ein Verbindeverfahren wird aus einem Vlies ein Vliesstoff. Das Vlies oder der Vliesstoff können trockengelegt, nassgelegt oder extrudiert sein.

Der Staubsaugerroboter kann einen Ausblasfilter, insbesondere mit einer Filterfläche von wenigstens 800 cm², umfassen. Der Ausblasfilter kann insbesondere plissiert bzw. gefaltet ausgebildet sein. Damit lässt sich eine große Oberfläche bei kleinerer Grundfläche erzielen. Dabei kann der Ausblasfilter in einer Halterung vorgesehen sein, wie sie beispielsweise in der Europäischen Patentanmeldung Nr. 14179375.2 beschrieben ist. Derartige Ausblasfilter erlauben den Einsatz von Staubsaugerfilterbeuteln mit geringer Abscheideleistung, beispielsweise von einlagigen Staubsaugerfilterbeuteln. Als Staubsaugerfilterbeutel mit geringer Abscheideleistung kann beispielsweise ein Beutel eingesetzt werden, bei dem das Filtermaterial der Beutelwand aus einem Spinnvlies (Spunbond) besteht, das ein Flächengewicht von 20 g/m² bis 60 g/m² aufweist. Insbesondere kann also der Staubsaugerfilterbeutel einlagig ausgebildet sein. Alternativ kann beispielsweise ein Beutel eingesetzt werden, bei dem das Filtermaterial der Beutelwand aus einem Laminat aus einem Spinnvlies, einem Meltblown und einem weiteren Spinnvlies (SMS) besteht.

Alternativ kann der Staubsaugerroboter ein beutelloser Sauger, insbesondere mit einem wie zuvor beschriebenen Ausblasfilter mit einer Filterfläche von wenigstens 800 cm², sein. Ein beutelloser Sauger ist ein Staubsauger, bei dem der eingesaugte Staub ohne einen Staubsaugerfilterbeutel abgeschieden und gesammelt wird. In diesem Fall kann die Staubsammeleinheit einen Prallabscheider oder einen Fliehkraftabscheider bzw. einen Zyklonabscheider umfassen.

Grundsätzlich kann die Bodendüse eine aktive oder eine passive Bodendüse sein. Eine aktive Bodendüse weist in der Saugöffnung eine Bürstenwalze (manchmal auch als Klopf- und/oder Rotationsbürste bezeichnet) auf. Dementsprechend können die beschriebenen Saugroboter eine Bürstenwalze aufweisen. Die Bürstenwalze kann elektromotorisch antreibbar sein. Eine passive Bodendüse weist keine Bürstenwalze auf.

Bei den beschriebenen Staubsaugerrobotern kann aufgrund der Gesamtkonstruktion auch mit einer passiven Bodendüse, also ohne Bürstenwalze, eine sehr gute Effizienz und Saugleistung erzielt werden. Beim Einsatz von passiven Bodendüsen vereinfacht sich der Aufbau und reduziert sich damit das Gewicht der Bodendüse, wodurch die Antriebseinrichtung der Bodendüse einen geringeren Leistungsbedarf hat.

Die beschriebenen Staubsaugerroboter sind zum selbständigen bzw. autonomen Abfahren einer zu reinigenden Fläche ausgebildet.

Die beschriebenen Staubsaugerroboter können eine Steuer- und Navigationseinrichtung zum selbständigen Verfahren der Bodendüse und/oder der Staubsammeleinheit umfassen. Damit wird ein autonomes Staubsaugen durch den Staubsaugerroboter ermöglicht. Die Steuer- und Navigationseinrichtung kann insbesondere zur Ansteuerung der Antriebseinrichtung der Staubsammeleinheit, der Antriebseinrichtung der Bodendüse und/oder der Motorgebläseeinheit ausgebildet sein. Die Steuer- und Navigationseinrichtung kann an oder in der Staubsammeleinheit und/oder an oder in der Bodendüse angeordnet sein. Insbesondere kann die Steuer- und Navigationseinrichtung ausschließlich an oder in der Staubsammeleinheit angeordnet sein. In diesem Fall kann auch die Steuerung und Navigation der Bodendüse auf Seiten der Staubsammeleinheit durchgeführt werden.

Die beschriebenen Staubsaugerroboter können eine Einrichtung zur Übermittlung von Steuersignalen von der Steuer- und Navigationseinrichtung zur Bodendüse aufweisen. Die Einrichtung zur von Steuersignalen kann zur Ausbildung einer drahtgebundenen oder einer drahtlosen Übermittlung eingerichtet sein.

Die beschriebenen Staubsaugerroboter können eine oder mehrere Einrichtungen zur Ortsbestimmung umfassen. Bei den Einrichtungen zur Ortsbestimmung kann es sich insbesondere um Kameras, Wegsensoren und/oder Abstandssensoren handeln. Die Abstandssensoren können beispielsweise auf Schallwellen oder elektromagnetischen Wellen basieren. Die Einrichtungen zur Ortsbestimmung können an oder in der Staubsammeleinheit und/oder an oder in der Bodendüse angeordnet sein.

Die beschriebenen Staubsaugerroboter können eine kabellose Stromversorgung aufweisen. Insbesondere können sie einen Akku zur Stromversorgung aufweisen.

Weitere Merkmale werden anhand der Figuren beschrieben. Dabei zeigt
- Figur 1: ein Ausführungsbeispiel eines zweiteiligen Staubsaugerroboters;
- Figur 2: ein Blockschaltbild eines zweiteiligen Staubsaugerroboters;
- Figur 3A und 3B: Ansichten von unten auf eine Bodendüse mit einem Luftströmungskanal;
- Figur 4 und 4B: Ansichten von unten auf eine Bodendüse mit einem Luftströmungskanal;
- Figur 5: ein Ausführungsbeispiel eines einteiligen Staubsaugerroboters.

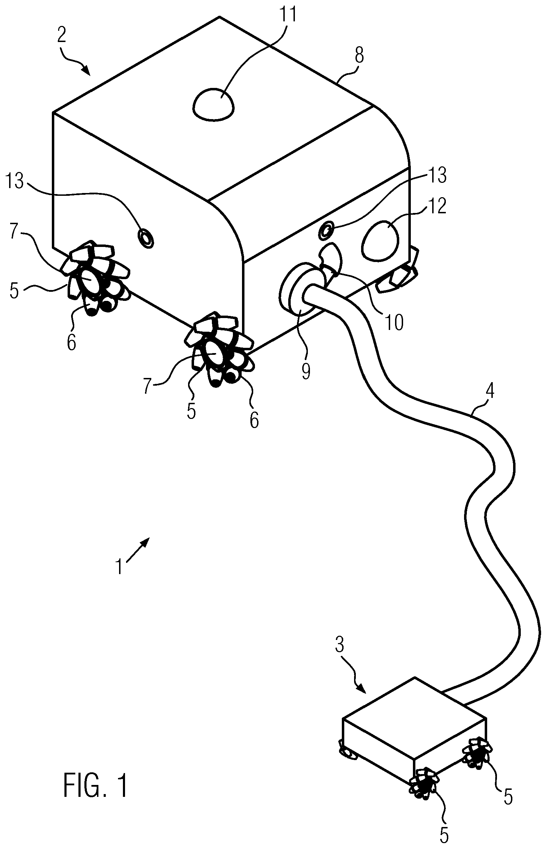

Figur 1 ist eine schematische Darstellung eines ersten Ausführungsbeispiels eines Staubsaugerroboters 1. Der gezeigte Staubsaugerroboter 1 umfasst eine Staubsammeleinheit 2 und eine Bodendüse 3, die über einen flexiblen Saugschlauch 4 mit der Staubsammeleinheit 2 verbunden ist. Der Staubsaugerroboter 1 ist somit zweiteilig aufgebaut, wobei die Staubsammeleinheit 2 und die Bodendüse 3 getrennte Einheiten bilden, die lediglich über den Saugschlauch 4 miteinander verbunden sind.

Die Staubsammeleinheit 2 ist auf vier Rädern 5 gelagert, wobei jedes dieser Räder als omnidirektionales Rad ausgebildet ist. Jedes omnidirektionale Rad 5 weist an seinem Umfang eine Mehrzahl von drehbar gelagerten Rollen 6 auf. Die Drehachsen der Rollen 6 sind alle nicht parallel zur Radachse 7 des jeweiligen omnidirektionalen Rads. So können beispielsweise die Drehachsen der Rollen einen Winkel von 45° zur jeweiligen Radachse einnehmen. Die Oberflächen der Rollen bzw. Rollkörper ist gewölbt bzw. gebogen.

Beispiele für derartige omnidirektionalen Räder sind in der US 3,876,255, der US 2013/0292918, der DE 10 2008 019 976 oder der DE 20 2013 008 870 beschrieben.

Die Staubsammeleinheit 2 weist eine Antriebseinrichtung auf, um die Räder 5 der Staubsammeleinheit anzutreiben. Die Antriebseinrichtung kann für jedes Rad 5 eine separate Antriebseinheit, beispielsweise in Form eines Elektromotors, aufweisen, so dass jedes Rad 5 unabhängig von den anderen Rädern antreibbar ist. Die Rollen 6 sind antriebslos drehbar gelagert.

Durch geeigneten Antrieb einzelner oder aller Räder 5 lässt sich die Staubsammeleinheit 2 in beliebige Richtungen bewegen. Werden beispielsweise alle vier Räder 5 mit gleicher Geschwindigkeit in gleicher Drehrichtung bewegt, so fährt die Staubsammeleinheit geradeaus. Durch eine gegenläufige Bewegung der Räder auf einer Seite kann ein seitliches Verfahren bzw. Verschieben erreicht werden.

Grundsätzlich müssen nicht alle Räder antreibbar ausgebildet sein; einzelne Räder können auch ohne eigenen Antrieb vorgesehen sein. Darüber hinaus ist es auch möglich, dass einzelne Räder, auch wenn sie grundsätzlich antreibbar sind, für bestimmte Bewegungen nicht angetrieben werden.

In alternativen Ausführungsformen können auch weniger oder mehr als vier Räder in Form von omnidirektionalen Rädern ausgebildet sein. Ein Beispiel mit drei omnidirektionalen Rädern ist in der US 2007/0272463 beschrieben.

Auch die Bodendüse 3 ist in dem gezeigten Beispiel mit vier omnidirektionalen Rädern 5 ausgestattet. Diese Räder sind in dem Ausführungsbeispiel kleiner dimensioniert als die Räder der Staubsammeleinheit 2. In analoger Form weist auch die Bodendüse 3 eine Antriebseinrichtung für die Räder 5 auf. Auch hier umfasst die Antriebseinrichtung für jedes Rad eine einzelne Antriebseinheit, beispielsweise in Form von Elektromotoren, um jedes Rad separat und unabhängig von den übrigen Rädern anzutreiben. Auf diese Weise kann auch die Bodendüse durch geeignetes Antreiben der Räder in beliebige Richtungen verfahren werden.

Die Bodendüse 3 weist eine Bodenplatte mit einer Grundfläche auf, die im Betrieb des Staubsaugerroboters dem Boden, d.h. der zu saugenden Fläche, zugewandt ist. In der Bodenplatte ist parallel zur Grundfläche ein Luftströmungskanal eingebracht, durch den die Schmutzluft eingesaugt wird. Darüber hinaus ist eine unten näher beschriebene Dreheinrichtung zum Drehen des Luftströmungskanals um eine Achse senkrecht zur Grundfläche vorgesehen.

In den gezeigten Beispielen weist die Staubsammeleinheit 2 ein Gehäuse 8 auf, an und auf dem eine Motorgebläseeinheit 9 angeordnet ist. Von der Motorgebläseeinheit 9 führt ein Rohrstück 10 in das Innere des Gehäuses 8 zu einem Staubsaugerfilterbeutel, der innerhalb des Gehäuses angeordnet ist und der einen Staubabscheider bildet. Der Staubsaugerfilterbeutel kann in herkömmlicher Weise, beispielsweise mittels einer Halteplatte, im Innern des Gehäuses 8 herausnehmbar befestigt sein.

In der gezeigten Anordnung wird somit durch die Bodendüse 3, den Saugschlauch 4, die Motorgebläseeinheit 9 und das Rohrstück 10 eine durchgängige fluidische bzw. strömungstechnische Verbindung mit dem Staubabscheider hergestellt. Die Motorgebläseeinheit 9 ist dabei zwischen dem Saugschlauch 4 und dem Staubabscheider angeordnet, so dass durch die Bodendüse angesaugte Schmutzluft durch die Motorgebläseeinheit 9 hindurch (insbesondere über das Rohrstück 10) in den im Innern des Gehäuses 8 angeordneten Staubsaugerfilterbeutel strömt.

Bei der Motorgebläseeinheit 9 handelt es sich somit um einen Dirty-Air-Motor oder Schmutzluftmotor. Es handelt sich insbesondere um eine Motorgebläseeinheit, die ein Radialgebläse aufweist.

Die Motorgebläseeinheit weist bei einer elektrischen Aufnahmeleistung von weniger als 450 W einen Volumenstrom von mehr als 30 l/s (bestimmt gemäß DIN EN 60312-1:2014-01 bei Blende 8), bei einer elektrischen Aufnahmeleistung von weniger als 250 W einen Volumenstrom vom mehr als 25 l/s und bei einer elektrischen Aufnahmeleistung von weniger als 100 W einen Volumenstrom von mehr als 10 l/s auf.

Der Gebläsedurchmesser kann 60 mm bis 160 mm betragen. Beispielsweise kann eine Motorgebläseeinheit der Firma AMETEC, Inc.verwendet werden, die auch in Soniclean Upright Staubsaugern (z. B. SONICLEAN VT PLUS) eingesetzt wird.

Die Motor-Gebläseeinheit des SONICLEAN VT PLUS wurde gemäß DIN EN 60312-1:2014-01 wie oben erläutert charakterisiert. Die Motorgebläseeinheit wurde ohne Staubsaugergehäuse gemessen. Für notwendige Zwischenstücke zum Anschluss an die Messkammer gelten die Ausführungen in Abschnitt 7.3.7.1. Die Tabelle zeigt, dass mit niedrigen Drehzahlen und geringer Aufnahmeleistung hohe Volumenströme erzielt werden.

| AMETEK "dirty air" (Gebläseraddurchmesser 82 mm) bei Blende 8 (40 mm) | | | | |
|---|---|---|---|---|
| Aufnahme leistung | Spannung | Drehzahl | Unterdruck Box | Volumen strom |
| [W] | [V] | [RPM] | [kPa] | [l/s] |
| 200 | 77 | 15.700 | 0,98 | 30,2 |
| 250 | 87 | 17.200 | 1,17 | 32,9 |
| 300 | 95 | 18.400 | 1,34 | 35,2 |
| 350 | 103 | 19.500 | 1,52 | 37,5 |
| 400 | 111 | 20.600 | 1,68 | 39,4 |
| 450 | 117 | 21.400 | 1,82 | 41,0 |

Im Betrieb wird durch die Motorgebläseeinheit 9 Luft angesaugt. Die Luftströmung tritt dabei durch eine Öffnung der Bodendüse 3 in den Staubsaugerroboter 1 ein und strömt durch den Saugschlauch 4 in die Motorgebläseeinheit 9. Aufgrund der Anordnung der Motorgebläseeinheit 9 - in Luftströmungsrichtung - vor dem Staubabscheider (in Form eines Staubsaugerfilterbeutels) herrscht im Gehäuse 8, wie auch im Staubabscheider ein Überdruck.

Bei herkömmlichen Staubsaugern ist die Motorgebläseeinheit in der Staubsammeleinheit in Luftströmungsrichtung hinter dem Staubabscheider, beispielsweise dem Staubsaugerfilterbeutel; angeordnet, was dazu führt, dass insbesondere das Gehäuse der Staubsammeleinheit einem Unterdruck ausgesetzt ist. Um eine Deformation des Gehäuses aufgrund des Unterdrucks zu vermeiden, muss dieses typischerweise verstärkt werden, beispielsweise mittels entsprechender Verstärkungsrippen. Bei der in Figur 1 illustrierten Konfiguration ist dies aufgrund des Überdrucks im Gehäuse 8 nicht oder nur in geringem Maße erforderlich.

Der Staubsaugerroboter 1 umfasst eine Steuer- und Navigationseinrichtung zum selbständigen Verfahren der Staubsammeleinheit 2 und der Bodendüse 3. Hierfür ist in dem Gehäuse 8 der Staubsammeleinheit 2 ein entsprechend programmierter Mikrocontroller angeordnet. Die Steuer- und Navigationseinrichtung ist mit Einrichtungen zur Ortsbestimmung verbunden. Hierzu gehören Kameras 11 und 12 sowie Abstandssensoren 13. Bei den Abstandssensoren kann es sich beispielsweise um Lasersensoren handeln.

Die Navigation des Staubsaugerroboters erfolgt in bekannter Weise, wie sie beispielsweise in der WO 02/074150 beschrieben ist. Die im Gehäuse 8 angeordnete Steuer- und Navigationseinrichtung steuert sowohl die Antriebseinheit der Staubsammeleinheit 2 als auch die Antriebseinheit der Bodendüse 3.

Für letzteres ist eine Einrichtung zur Übermittlung von Steuersignalen von der Steuer- und Navigationseinrichtung im Gehäuse 8 der Staubsammeleinheit 2 zur Bodendüse 3, insbesondere zur Antriebseinrichtung der Bodendüse, vorgesehen. Hierfür können auf Seiten der Staubsammeleinheit 2 und der Bodendüse 3 jeweils drahtlose Sender/Empfänger angeordnet sein. Alternativ kann entlang des Saugschlauchs auch eine drahtgebundene Verbindung zur Übermittlung von Steuersignalen vorgesehen sein.

Auch die Bodendüse 3 kann unterstützend eine oder mehrere Einrichtungen zur Ortsbestimmung umfassen. Beispielsweise können an der Bodendüse Wegsensoren und/oder Abstandssensoren vorgesehen sein. Um die entsprechenden Informationen für die Steuerung und Navigation zu verwenden, werden entsprechende Signale von der Bodendüse zur Steuer- und Navigationseinrichtung übermittelt.

Die Energieversorgung des Staubsaugerroboters kann kabelgebunden oder kabellos erfolgen. So kann insbesondere die Staubsammeleinheit 2 ein Stromkabel zum Anschluss an eine Steckdose aufweisen. Die Stromversorgung der Bodendüse, insbesondere ihrer Antriebseinrichtung, erfolgt über ein Stromversorgungskabel im oder entlang des Saugschlauchs 4.

Alternativ oder zusätzlich kann die Staubsammeleinheit 2 auch Akkus aufweisen, die beispielsweise kabelgebundene oder kabellos (induktiv) geladen werden können. Zum Aufladen der Akkus kann sich der Staubsauger 1 beispielsweise selbsttätig zu einer Ladestation bewegen. Sofern die Stromversorgung der Antriebseinrichtung der Bodendüse nicht ausschließlich über eine Stromverbindung über den Saugschlauch 4 erfolgt, kann die Bodendüse 3 selbst auch Akkus aufweisen.

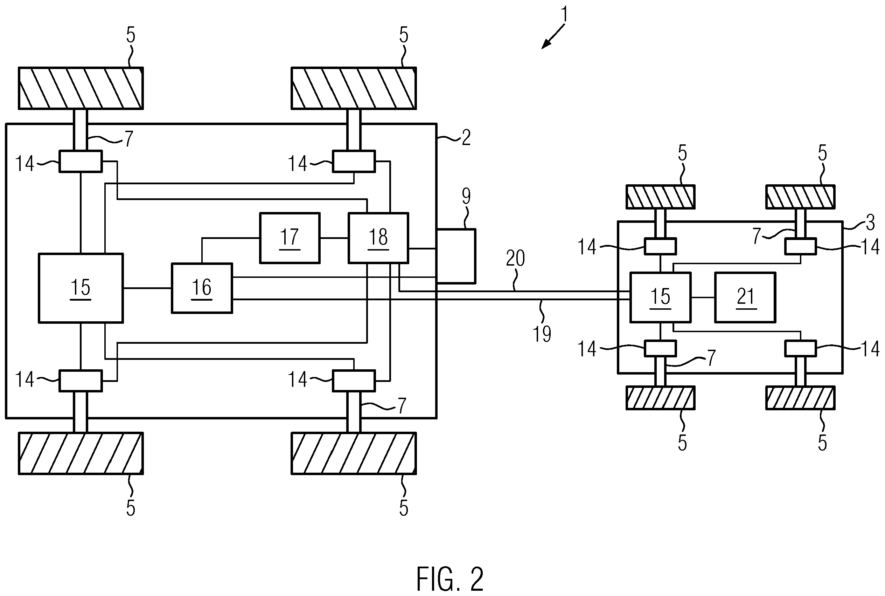

Figur 2 ist ein schematisches Blockschaltbild eines Staubsaugerroboters 1 mit einer Staubsammeleinheit 2 und einer Bodendüse 3. Die Antriebseinrichtung für die Räder 5 der Staubsammeleinheit 2 umfasst zum einen vier Antriebseinheiten 14 in Form von Elektromotoren und zum anderen einen Mikrocontroller 15 zur Ansteuerung der Elektromotoren.

In der Staubsammeleinheit 2 ist weiterhin eine Steuer- und Navigationseinrichtung 16 vorgesehen, die dem selbstständigen Verfahren der Staubsammeleinheit und der Bodendüse dient. Die Steuer- und Navigationseinrichtung 16 ist sowohl mit dem Mikrocontroller 15 der Antriebseinrichtung als auch mit einem weiteren Mikrocontroller 17 verbunden, der Teil der Einrichtungen zur Ortsbestimmung ist. In dem Mikrocontroller 17 werden Datensignale von unterschiedlichen Sensoren und/oder Kameras verarbeitet und der Steuer- und Navigationseinrichtung 16 zur Verfügung gestellt.

Die Steuer- und Navigationseinrichtung 16 ist außerdem mit der Motorgebläseeinheit 9 verbunden, um diese anzusteuern.

Die Strom- bzw. Spannungsversorgung erfolgt in dem gezeigten Beispiel über einen Akku 18, der drahtlos oder drahtgebundenen aufgeladen werden kann. Der Übersichtlichkeit halber sind nicht alle Stromversorgungsverbindungen in der Figur wiedergegeben.

Die Bodendüse 3 weist ebenfalls eine Antriebseinrichtung für ihre vier Räder 5 auf, wobei die Antriebseinrichtung, wie im Falle der Staubsammeleinheit 2, einen Mikrocontroller 15 sowie vier Elektromotoren 14 umfasst. Die Steuersignale für die Antriebseinrichtung der Bodendüse 3 kommen von der Steuer- und Navigationseinrichtung 16, die in der Staubsammeleinheit 2 angeordnet ist. Die Übermittlung der Signale erfolgt über eine Verbindungsleitung 19, die beispielsweise in der Wandung des Saugschlauchs angeordnet sein kann. Alternativ könnte diese Signalübertragung allerdings auch drahtlos erfolgen.

Die Bodendüse kann als aktive Bodendüse (mit angetriebener Bürstenwalze) oder passiv (ohne angetriebene) Bürstenwalze ausgeführt sein.

Die Strom- und Spannungsversorgung erfolgt über den Akku 18 der Staubsammeleinheit 2. Hierfür ist eine Leitung 20 vorgesehen, die in der Wandung des Saugschlauchs angeordnet ist.

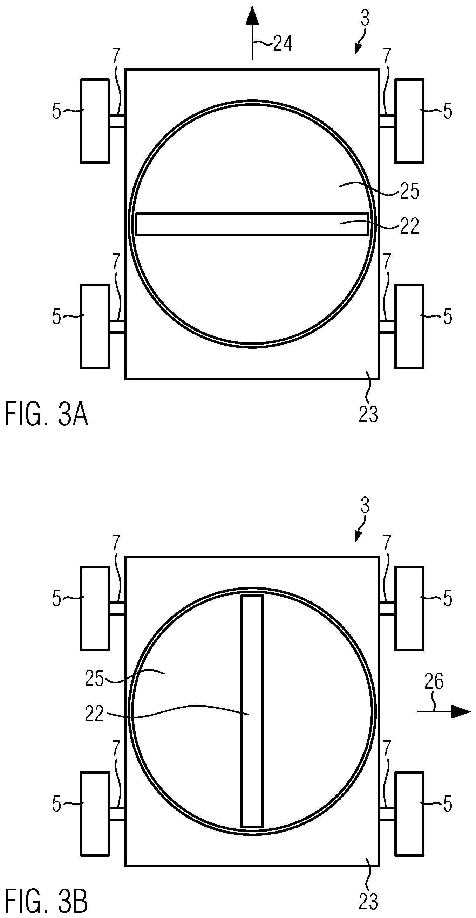

Die Bodendüse 3 weist weiterhin eine elektronische Drehsteuerung 21 auf, um eine in der Bodendüse vorgesehene Dreheinrichtung anzusteuern. Figur 3A ist eine schematische Ansicht einer Bodendüse 3 von unten. Ein Luftströmungskanal 22 ist in der Bodenplatte 23 der Bodendüse 3 vorgesehen. Der gezeigte Luftströmungskanal 22 weist parallel zur Grundfläche der Bodenplatte 23 zwei parallele Längs- und Querseiten, mithin eine rechteckige Form auf.

In dem in Figur 3A illustrierten Ausführungsbeispiel werden die Räder 5 der Bodendüse 3 derart angetrieben, dass sich die Bodendüse in einer Vorwärtsrichtung bewegt, wie sie durch den Pfeil 24 angezeigt wird. Der Luftströmungskanal 22 ist in einem Drehteller 25 ausgebildet, der Teil der Bodenplatte 23 ist. Der Drehteller 25 ist um eine Achse senkrecht zur Grundfläche der Bodenplatte 23 drehbar gelagert.

Die elektronische Drehsteuerung 21 mit dem Mikrocontroller 15 der Antriebseinrichtung der Bodendüse 3 verbunden. In Abhängigkeit von der Ansteuerung der Elektromotoren 14 der Bodendüse 3 richtet die elektronische Drehsteuerung 21 den Luftströmungskanal 22 durch eine entsprechende Drehung des Drehtellers 20 quer bzw. senkrecht zur Bewegungsrichtung 24 der Bodendüse 3 aus.

Wenn die Räder 5 der Bodendüse 3 derart angetrieben werden, dass sich die Bodendüse 3, wie durch den Pfeil 26 in Figur 3B angedeutet, in einer Querrichtung bewegt, steuert die elektronische Drehsteuerung 21 den Drehteller 20 derart an, dass durch eine entsprechende Drehung des Drehtellers 20 der Luftströmungskanal 22 quer bzw. senkrecht zur Bewegungsrichtung 26. der Bodendüse 3 ausgerichtet wird.

Eine entsprechende Ausrichtung des Luftströmungskanals 22 ist grundsätzlich für beliebige Bewegungsrichtungen der Bodendüse 3 möglich.

Anstelle der elektronischen Drehsteuerung 21 kann die Ausrichtung des Luftströmungskanals auch auf mechanischem Weg erfolgen..

Statt des gezeigten einen Luftströmungskanals können auch mehrere Luftströmungskanäle im Drehteller vorgesehen sein. Diese können beispielsweise parallel zueinander angeordnet sein.

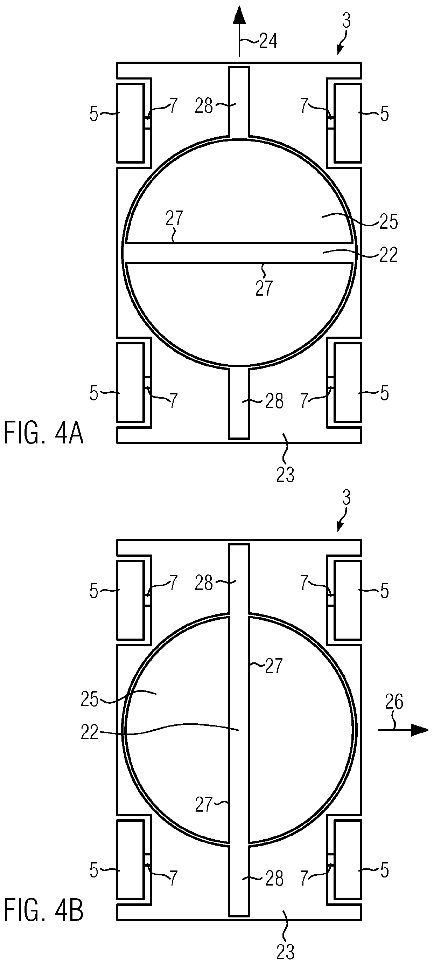

Figur 4A zeigt schematisch eine weitere Ansicht einer Bodendüse 3 von unten, wobei gleiche Elemente wie in den Figuren 3A und 3B mit gleichen Bezugszeichen versehen sind. In diesem Beispiel sind die Räder 5 nicht wie in den Figuren 3A und 3D seitlich neben einer rechteckigen Bodenplatte angeordnet, sondern vielmehr innerhalb der Breite (also der maximalen Breitenausdehnung) der Bodenplatte 23 vorgesehen.

Eine solche Bodenplatte 23 kann also mit ihrer Längsseite unmittelbar an eine Wand angenähert werden und entlang dieser Wand mit einer Bewegung in Längsrichtung, wie durch den Pfeil 24 angedeutet, bewegt werden, ohne dass die Räder 5 einen weiteren Abstand zur Wand erfordern würden.

Der Luftströmungskanal 22 weist zwei parallele Querseiten 27 auf und erstreckt sich über den gesamten Drehteller. Seine Querlänge entspricht also dem Durchmesser des Drehtellers. Die Enden des Luftströmungskanals in Querrichtung, also die Längsseiten, sind offen.

Die Bodenplatte weist zusätzlich zwei Teilkanäle 28 auf, die jeweils mit einer Längsseite zum Drehteller hin offen sind. Wenn sich die Bodendüse, wie in Figur 4B gezeigt, in Querrichtung, wie mit dem Pfeil 26 angedeutet, bewegt, wird der Luftströmungskanal um 90° gedreht und somit bezüglich der neuen Bewegungsrichtung ausgerichtet. Damit fluchten die Teilkanäle 28 und der Luftströmungskanal 22, so dass letzterer durch die Teilkanäle 28 verlängert wird. Auf diese Weise wird auch bei einer Querbewegung der Bodendüse die vom (verlängerten) Luftströmungskanal 22 überstrichene Fläche maximiert.

Bei dem in Figur 1 gezeigten Beispiel handelt es sich um einen Beutelsauger. Dies bedeutet, dass in der Staubsammeleinheit 2 ein Staubsaugerfilterbeutel angeordnet ist, in dem der eingesaugte Schmutz und Staub abgeschieden wird. Bei diesem Staubsaugerfilterbeutel kann es sich insbesondere um einen Flachbeutel handeln, dessen Beutelwandungen eine oder mehrere Lagen von Vlies- und/oder Vliesstoff umfassen. Der Staubsaugerfilterbeutel ist als Wegwerfbeutel ausgeführt.

Bei der Verwendung insbesondere von einlagigen Staubsaugerfilterbeuteln, bei denen die Beutelwand beispielsweise aus genau einer Vliesstofflage in Form eines Spunbonds besteht, ist die Verwendung eines Ausblasfilters vorteilhaft. Mit dem Ausblasfilter kann Feinstaub gefiltert werden, der im Staubsaugerfilterbeutel nicht abgeschieden wurde. Ein solcher Ausblasfilter kann eine Fläche von wenigstens 800 cm² aufweisen. Er kann insbesondere plissiert bzw. gefaltet ausgebildet sein, um eine große Oberfläche bei kleinerer Grundfläche (als die Oberfläche) zu haben.

Der Saugschlauch 4 hat typischerweise einen Durchmesser in einem Bereich von 25 mm bis 50 mm und eine Länge in einem Bereich von 500 mm bis 2500 mm.

Alternativ zu dem oben Beschriebenen kann der Staubsaugerroboter auch ein beutelloser Sauger sein, bei dem die Staubsammeleinheit 2 einen Fliehkraft- bzw. Zyklonabscheider umfasst, in dem die eingesaugten Schmutz- und Staubpartikel mittels der Fliehkraft abgeschieden werden. Alternativ kann der beutellose Staubsauger auch als Prallabscheider ausgebildet sein.

Insbesondere im Falle beutelloser Sauger weist die Staubsammeleinrichtung einen Ausblasfilter auf, mit dem Feinstaub gefiltert wird, der im Fliehkraftabscheider nicht abgeschieden wurde. Dieser Ausblasfilter kann eine Fläche von wenigstens 800 cm² aufweisen. Er kann insbesondere plissiert bzw. gefaltet ausgebildet sein, um eine große Oberfläche bei kleinerer Grundfläche zu haben. Dabei kann der Ausblasfilter in einer Halterung vorgesehen sein, wie sie in der europäischen Patentanmeldung Nr. 14179375.2 beschrieben ist.

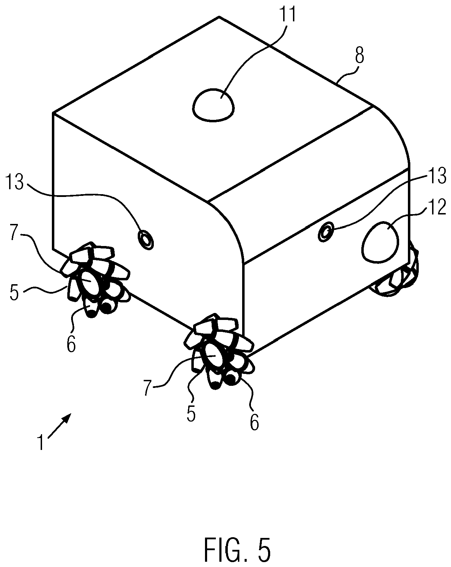

Figur 5 illustriert schematisch ein alternatives Ausführungsbeispiel, bei dem für gleiche Elemente die gleichen Bezugszeichen wie in Figur 1 verwendet werden. Bei dem in Figur 5 gezeigten Beispiel handelt es sich um einen einteiligen Staubsaugerroboter 1, bei dem auf der Unterseite des Gehäuses 8 eine Bodendüse angeordnet ist, wie sie in den Figuren 3A und 3B illustriert ist. Alternativ können die Räder auch, wie in den Figuren 4A und 4B illustriert, innerhalb der Breite der Bodendüse (und damit innerhalb der Breite des gesamten einteiligen Staubsaugerroboters) angeordnet sein.

Im Innern des Gehäuses 8 eine Motorgebläseeinheit sowie eine Staubsammeleinheit angeordnet. Die Bodendüse und die Staubsammeleinheit werden damit in diesem Beispiel gemeinsam auf den Rädern 5 gelagert.

In diesem Beispiel kann der Staubsaugerroboter 1 eine aktiv angetriebene Bürstenwalze aufweisen. Eine Motorgebläseeinheit (sei es ein Clean-Air- oder ein Dirty-Air-Motor) können, müssen aber nicht vorgesehen sein.

Im Übrigen finden die in Zusammenhang mit den übrigen Figuren beschriebenen Merkmale auch im Beispiel der Figur 5 analog Anwendung.

## Patentansprüche

1. Staubsaugerroboter (1), umfassend eine auf Rädern (5) gelagerte Bodendüse (3) und eine Staubsammeleinheit (2),
wobei die Bodendüse eine Antriebseinrichtung (14, 15) aufweist, um wenigstens eines der Räder der Bodendüse anzutreiben,
wobei die Bodendüse eine Bodenplatte (23) mit einer Grundfläche aufweist, die im Betrieb des Staubsaugerroboters der zu reinigenden Fläche zugewandt ist, wobei die Bodenplatte parallel zur Grundfläche einen Luftströmungskanal (22) aufweist, durch den zu reinigende Luft in die Bodendüse eintritt,
**dadurch gekennzeichnet, dass**
eines der Räder, mehrere oder alle Räder der Bodendüse omnidirektionale Räder sind und die Bodendüse eine Dreheinrichtung zum Drehen des Luftströmungskanals um eine Achse senkrecht zur Grundfläche umfasst.

2. Staubsaugerroboter nach Anspruch 1, wobei die Dreheinrichtung zum Ausrichten des Luftströmungskanals senkrecht zu einer Bewegungsrichtung der Bodendüse ausgebildet ist.

3. Staubsaugerroboter nach Anspruch 1 oder 2, wobei die Dreheinrichtung einen um eine Achse senkrecht zur Grundfläche der Bodenplatte drehbar gelagerten Drehteller (25) aufweist, in dem der Luftströmungskanal ausgebildet ist

4. Staubsaugerroboter nach einem der vorangegangenen Ansprüche, umfassend eine mechanische Drehsteuerung (21) zum Ansteuern der Dreheinrichtung oder eine elektronische Drehsteuerung (21) zum Ansteuern der Dreheinrichtung, insbesondere wobei die elektronische Drehsteuerung mit der Antriebseinrichtung der Bodendüse gekoppelt ist.

5. Staubsaugerroboter nach einem der vorangegangen Ansprüche, wobei der Luftströmungskanal in Querrichtung eine Ausdehnung von wenigstens 90%, vorzugsweise von wenigstens 95 %, einer Breite der Bodendüse, insbesondere der Bodenplatte und/oder des Drehtellers, aufweist.

6. Staubsaugerroboter nach einem der vorangegangenen Ansprüche, wobei die Staubsammeleinheit gemeinsam mit der Bodendüse auf den Rädern der Bodendüse gelagert ist, oder
wobei die Staubsammeleinheit separat von der Bodendüse auf Rädern gelagert ist und über einen Saugschlauch (4) mit der Bodendüse fluidisch verbunden ist, wobei die Staubsammeleinheit eine Antriebseinrichtung (14, 15) aufweist, um wenigstens eines der Räder der Staubsammeleinheit anzutreiben.

7. Staubsaugerroboter nach Anspruch 6, wobei die Staubsammeleinheit separat von der Bodendüse auf Rädern gelagert ist und wobei eines der Räder, mehrere oder alle Räder der Staubsammeleinheit omnidirektionale Räder sind.

8. Staubsaugerroboter nach einem der vorangegangenen Ansprüche, weiterhin umfassend eine Motorgebläseeinheit (9) zum Ansaugen eines Luftstroms durch die Bodendüse, insbesondere wobei die Motorgebläseeinheit ein Radialgebläse aufweist.

9. Staubsaugerroboter nach Anspruch 8, wobei die Motorgebläseeinheit zwischen der Bodendüse und der Staubsammeleinheit derart angeordnet ist, dass ein durch die Bodendüse angesaugter Luftstrom durch die Motorgebläseeinheit hindurch in die Staubsammeleinheit strömt.

10. Staubsaugerroboter nach einem der vorangegangenen Ansprüche, wobei die Motorgebläseeinheit auf und/oder über der Bodendüse, insbesondere unmittelbar auf und/oder über der Bodendüse, angeordnet ist.

11. Staubsaugerroboter nach einem der vorangegangenen Ansprüche, wobei die Staubsammeleinheit über einen Saugschlauch (4) mit der Bodendüse fluidisch verbunden ist und wobei die Motorgebläseeinheit zwischen der Bodendüse und dem Saugschlauch derart angeordnet ist, dass der durch die Bodendüse angesaugte Luftstrom durch die Motorgebläseeinheit hindurch in den Saugschlauch strömt.

12. Staubsaugerroboter nach einem der vorangegangenen Ansprüche, wobei die Staubsammeleinheit über einen Saugschlauch (4) mit der Bodendüse fluidisch verbunden ist und wobei die Motorgebläseeinheit zwischen dem Saugschlauch und der Staubsammeleinheit derart angeordnet ist, dass der durch die Bodendüse eingesaugt Luftstrom durch den Saugschlauch hindurch in die Motorgebläseeinheit und durch die Motorgebläseeinheit hindurch in die Staubsammeleinheit strömt.

13. Staubsaugerroboter nach einem der vorangegangenen Ansprüche, wobei die Staubsammeleinheit ein Gehäuse (8) und einen in dem Gehäuse angeordneten Staubabscheider umfasst, wobei die Motorgebläseeinheit auf, an oder in dem Gehäuse angeordnet ist.

14. Staubsaugerroboter nach einem der vorangegangenen Ansprüche, umfassend einen Ausblasfilter, insbesondere mit einer Filterfläche von wenigstens 800 cm².

15. Staubsaugerroboter nach einem der vorangegangenen Ansprüche, wobei der Staubsaugerroboter ein Beutelsauger, insbesondere mit einer Filterfläche von wenigstens 800 cm² ist.

16. Staubsaugerroboter nach einem der Ansprüche 1 - 14, wobei der Staubsaugerroboter ein beutelloser Sauger ist, insbesondere umfassend einen Prallabscheider oder einen Fliehkraftabscheider.

17. Staubsaugerroboter nach einem der vorangegangenen Ansprüche, umfassend eine Steuer- und Navigationseinrichtung (16) zum selbstständigen Verfahren der Bodendüse und/oder der Staubsammeleinheit und/oder umfassend eine oder mehrere Einrichtungen (11; 12; 13) zur Ortsbestimmung.

## Claims

1. A robot vacuum cleaner (1) comprising a floor nozzle (3) supported on wheels (5) and a dust collection unit (2),
wherein the floor nozzle comprises a driving device (14, 15) for driving at least one of the wheels of the floor nozzle,
wherein the floor nozzle comprises a base plate (23) with a base surface, which, when the robot vacuum cleaner is in operation, faces the surface to be cleaned, the base plate having provided therein an air flow channel (22), which extends parallel to the base surface and through which air to be cleaned enters the floor nozzle,
**characterized in that**
one of the wheels, a plurality of or all of the wheels of the floor nozzle are omnidirectional wheels, and that the floor nozzle comprises a rotating means for rotating the air flow channel about an axis perpendicular to the base surface.

2. The robot vacuum cleaner according to claim 1, wherein the rotating means is configured for orienting the air flow channel perpendicular to a direction of movement of the floor nozzle.

3. The robot vacuum cleaner according to claim 1 or 2, wherein the rotating means comprises a rotary disk (25), which is supported such that it is rotatable about an axis perpendicular to the base surface of the base plate and which has the air flow channel formed therein.

4. The robot vacuum cleaner according to one of the preceding claims, comprising a mechanical rotation control unit (21) for controlling the rotating means or an electronic rotation control unit (21) for controlling the rotating means, wherein in particular the electronic rotation control unit is coupled to the driving device of the floor nozzle.

5. The robot vacuum cleaner according to one of the preceding claims, wherein the air flow channel has, in a transverse direction, a dimension of at least 90%, preferably of at least 95%, of a width of the floor nozzle, in particular of the base plate and/or of the rotary disk.

6. The robot vacuum cleaner according to one of the preceding claims, wherein the dust collection unit is supported together with the floor nozzle on the wheels of the floor nozzle or
wherein the dust collection unit is supported on wheels separately from the floor nozzle and is in fluidic communication with the floor nozzle via a suction hose (4), wherein the dust collection unit comprises a driving device (14, 15) for driving at least one of the wheels of the dust collection unit.

7. The robot vacuum cleaner according to claim 6, wherein the dust collection unit is supported on wheels separately from the floor nozzle, and wherein one of the wheels, a plurality of or all of the wheels of the dust collection unit are omnidirectional wheels.

8. The robot vacuum cleaner according to one of the preceding claims, further comprising a motor fan unit (9) for sucking in a flow of air through the floor nozzle, the motor fan unit comprising in particular a radial fan.

9. The robot vacuum cleaner according to claim 8, wherein the motor fan unit is arranged between the floor nozzle and the dust collection unit such that a flow of air sucked in through the floor nozzle will pass through the motor fan unit and flow into the dust collection unit.

10. The robot vacuum cleaner according to one of the preceding claims, wherein the motor fan unit is arranged on and/or over the floor nozzle, in particular directly on and/or over the floor nozzle.

11. The robot vacuum cleaner according to one of the preceding claims, wherein the dust collection unit is in fluidic communication with the floor nozzle via a suction hose (4), and wherein the motor fan unit is arranged between the floor nozzle and the suction hose such that the flow of air sucked in through the floor nozzle will pass through the motor fan unit and flow into the suction hose.

12. The robot vacuum cleaner according to one of the preceding claims, wherein the dust collection unit is in fluidic communication with the floor nozzle via a suction hose (4), and wherein the motor fan unit is arranged between the suction hose and the dust collection unit such that the flow of air sucked in through the floor nozzle will pass through the suction hose and flow into the motor fan unit, and pass through the motor fan unit and flow into the dust collection unit.

13. The robot vacuum cleaner according to one of the preceding claims, wherein the dust collection unit comprises a housing (8) and a dust collector arranged within said housing, the motor fan unit being arranged on, at or in said housing.

14. The robot vacuum cleaner according to one of the preceding claims, comprising an exhaust filter, in particular an exhaust filter having a filter area of at least 800 cm².

15. The robot vacuum cleaner according to one of the preceding claims, wherein the robot vacuum cleaner is a bag-type vacuum cleaner, in particular a bag-type vacuum cleaner having a filter area of at least 800 cm².

16. The robot vacuum cleaner according to one of the claims 1 to 14, wherein the robot vacuum cleaner is a bagless vacuum cleaner, in particular a bagless vacuum cleaner comprising an impact separator or a centrifugal force separator.

17. The robot vacuum cleaner according to one of the preceding claims, comprising a control and navigation unit (16) for an automatic movement of the floor nozzle and/or of the dust collection unit and/or comprising one or a plurality of position determination means (11; 12; 13).

## Revendications

1. Robot aspirateur (1) qui comprend un suceur de sol (3) logé sur des roues (5) et une unité collectrice de poussières (2),
le suceur de sol présentant un dispositif d'entraînement (14, 15) pour l'entraînement d'au moins une des roues du suceur de sol,
le suceur de sol présentant une plaque de fond (23) dotée d'une surface de base qui est orientée - durant le fonctionnement du robot aspirateur - vers la surface à nettoyer, la plaque de fond présentant parallèlement à la surface de base un conduit d'écoulement d'air (22), à travers lequel de l'air à purifier pénètre dans le suceur de sol,
**caractérisé en ce que**
l'une des roues, plusieurs roues ou toutes les roues du suceur de sol sont des roues omnidirectionnelles et que le suceur de sol comprend un dispositif de rotation pour la rotation du conduit d'écoulement d'air autour d'un axe perpendiculaire à la surface de base.

2. Robot aspirateur, selon la revendication 1, le dispositif de rotation étant configuré perpendiculairement à une direction de déplacement du suceur de sol pour l'orientation du conduit d'écoulement d'air.

3. Robot aspirateur, selon la revendication 1 ou 2, le dispositif de rotation présentant un plateau tournant (25) logé de manière rotative autour d'un axe perpendiculaire à la surface de base de la plaque de fond, dans lequel se trouve le conduit d'écoulement d'air.

4. Robot aspirateur, selon l'une des revendications précédentes, comprenant une commande rotative mécanique (21) pour le pilotage du dispositif rotatif ou une commande rotative électronique (21) pour le pilotage du dispositif rotatif, la commande rotative électronique étant en particulier couplée au dispositif d'entraînement du suceur de sol.

5. Robot aspirateur, selon l'une des revendications précédentes, le conduit d'écoulement d'air présentant dans le sens transversal un élargissement correspondant à au moins 90 %, et de préférence à au moins 95 %, d'une largeur du suceur de sol, et plus particulièrement de la plaque de fond et/ou du plateau rotatif.

6. Robot aspirateur, selon l'une des revendications précédentes, l'unité collectrice de poussières étant logée, conjointement au suceur de sol, sur les roues du suceur de sol, ou
l'unité collectrice de poussières étant logée, séparément du suceur de sol, sur des roues et reliée de manière fluide au suceur de sol par le biais d'un tuyau souple d'aspiration (4), l'unité collectrice de poussières présentant un dispositif d'entraînement (14, 15) destiné à entraîner au moins l'une des roues de l'unité collectrice de poussières.

7. Robot aspirateur, selon la revendication 6, l'unité collectrice de poussières étant logée sur des roues, séparément du suceur de sol, et l'une des roues, plusieurs roues ou toutes les roues de l'unité collectrice de poussières étant des roues omnidirectionnelles.

8. Robot aspirateur, selon l'une des revendications précédentes, comprenant en outre un groupe motoventilateur (9) pour l'aspiration d'un flux d'air à travers le suceur de sol, le groupe motoventilateur présentant en particulier un ventilateur radial.

9. Robot aspirateur, selon la revendication 8, le groupe motoventilateur étant installé de telle manière entre le suceur de sol et l'unité collectrice de poussières qu'un flux d'air aspiré par le suceur de sol s'écoule à travers le groupe motoventilateur jusque dans l'unité collectrice de poussières.

10. Robot aspirateur, selon l'une des revendications précédentes, le groupe motoventilateur étant installé sur le et/ou au dessus du suceur de sol, et plus particulièrement sur le et/ou au dessus du suceur de sol.

11. Robot aspirateur, selon l'une des revendications précédentes, l'unité collectrice de poussières étant reliée de manière fluide au suceur de sol par le biais d'un tuyau souple d'aspiration (4), et le groupe motoventilateur étant installé de telle manière entre le suceur de sol et le tuyau souple d'aspiration que le flux d'air aspiré par le suceur de sol s'écoule à travers le groupe motoventilateur jusque dans le tuyau souple d'aspiration.

12. Robot aspirateur, selon l'une des revendications précédentes, l'unité collectrice de poussières étant reliée de façon fluide au suceur de sol par le biais d'un tuyau souple d'aspiration (4), et le groupe motoventilateur étant installé de telle manière entre le tuyau souple d'aspiration et l'unité collectrice de poussières que le flux d'air aspiré par le suceur de sol s'écoule à travers le tuyau souple d'aspiration jusque dans le groupe motoventilateur, et à travers le groupe motoventilateur jusque dans l'unité collectrice de poussières.

13. Robot aspirateur, selon l'une des revendications précédentes, l'unité collectrice de poussières comportant un boîtier (8) et un séparateur de poussières installé dans le boîtier, le groupe motoventilateur étant installé sur, contre ou dans le boîtier.

14. Robot aspirateur, selon l'une des revendications précédentes, comprenant un filtre de sortie, en particulier avec une surface filtrante d'au moins 800 cm2.

15. Robot aspirateur, selon l'une des revendications précédentes, le robot aspirateur étant un aspirateur à sac, en particulier avec une surface filtrante d'au moins 800 cm2.

16. Robot aspirateur, selon l'une des revendications 1 à 14, le robot aspirateur étant un aspirateur sans sac, comprenant en particulier un séparateur à impact ou un séparateur centrifuge.

17. Robot aspirateur, selon l'une des revendications précédentes, comportant un dispositif de commande et de navigation (16) pour le déplacement autonome du suceur de sol et/ou de l'unité collectrice de poussières et/ou comportant un ou plusieurs dispositifs (11 ; 12 ; 13) permettant la localisation.
